# EUROPÄISCHE PATENTSCHRIFT

(11) **EP 1 110 978 B1**
(45) Veröffentlichungstag und Bekanntmachung des Hinweises auf die Patenterteilung: **10.03.2010**
(21) Anmeldenummer: 00125251.9
(22) Anmeldetag: 24.11.2000
(51) Int. Cl.: C08F 218/04, C08F 220/12, C04B 24/26

(54) **Verfahren zur Herstellung von Vinylester-(Meth)acrylsäureester-Mischpolymerisaten**
Process for preparing copolymers of vinylester and (meth)acrylic ester
Procédé de préparation de copolymères d'ester vinylique et d'ester d'acide (meth)acrylique

(30) Priorität: 23.12.1999 DE 19962566
(43) Veröffentlichungstag der Anmeldung: 27.06.2001
(73) Patentinhaber: Wacker Chemie AG, 81737 München (DE)
(72) Erfinder: Weitzel, Hans-Peter, Dr., 84571 Reischach (DE)
(74) Vertreter: Schuderer, Michael

(56) Entgegenhaltungen:
- EP-A- 0 757 065
- WO-A-99/06454
- WO-A-99/42504
- DE-B- 1 173 252
- DE-B- 1 494 002
- US-A- 5 753 036

## Beschreibung

Die Erfindung betrifft ein Verfahren zur Herstellung von Polyvinylalkohol-stabilisierten Mischpolymerisaten auf Basis von Vinylester- und (Meth)acrylsäureester-Comonomeren in Form deren wässrigen Dispersionen und in Wasser redispergierbaren Dispersionspulver, sowie deren Verwendung gemäß Ansprüchen 1-11.

Schutzkolloid-stabilisierte Polymerisate werden vor allem in Form deren wässriger Dispersionen oder in Wasser redispergierbarer Polymerpulver in vielerlei Anwendungen, beispielsweise als Beschichtungsmittel oder Klebemittel für die unterschiedlichsten Substrate eingesetzt. Als Schutzkolloide werden in der Regel Polyvinylalkohole eingesetzt. Der Einsatz von Polyvinylalkohol ist erstrebenswert, weil dieser im Vergleich zu Systemen, die durch niedermolekulare Verbindungen (Emulgatoren) stabilisiert sind, selbst zur Festigkeit (z.B. Haftzugswerte im Fliesenkleber) beiträgt.

Als Monomere zur Herstellung von redispergierbaren Pulvern werden bisher bevorzugt Vinylester und Ethylen eingesetzt, da die Stabilisierung von Acrylatcopolymeren bzw. Styrolacrylatcopolymeren durch Polyvinylalkohol nicht so einfach zu bewerkstelligen ist. Insbesondere ist es nicht trivial eine Acrylatdispersion alleinig mit Polyvinylalkohol so zu stabilisieren, daß die daraus resultierenden Pulver block- bzw. lagerstabil sind. Auch die Kombination von Vinylester und Ethylen mit (Meth)acrylaten wird aus dem gleichen Grund selten beschrieben (beispielsweise in der EP-A 765898). Häufiger beschrieben sind hingegen wässrige Dispersionen auf dieser Basis, also z.B. Vinylacetat-Butylacrylatcopolymere oder Vinylacetat-Acrylat-Ethylen-Copolymere. Diese Dispersionen sind jedoch emulgatorstabilisiert und können daher nicht zu redispergierbaren Pulvern versprüht werden.

Bei Verwendung der Kombination Vinylester mit Ethylen ist der zugängliche Tg-Bereich auf einen Bereich von ca. +30°C (Vinylacetathomopolymer) bis ca. -25°C eingeschränkt. Höhere Glastemperaturen sind nicht zugänglich, da es kein systemgerechtes Monomer gibt, das zu höheren Glastemperaturen führt als Vinylacetat; Vinylchlorid ist aus ökologischen Gründen nicht mehr zeitgerecht und wird kaum mehr verwendet. Andererseits sind tiefere Glastemperaturen als -25°C nur schwer zugänglich, da hierzu Ethylenmengen von deutlich mehr als 50 Mol-% in der Monomermischung notwendig werden. Diese hochethylenhaltigen Polymere lassen sich zwar herstellen, neigen aber zur Kristallisation, so daß kein eindeutiger Glaspunkt mehr gefunden wird; außerdem zeigen diese Polymere nicht die für diese Tg erwarteten hochelastischen Eigenschaften.

Durch die Kombination von Vinylester und Ethylen mit (Meth)acrylaten wäre der Tg-Bereich zu höheren und niedrigeren Tg-Bereichen ausweitbar. Demgegenüber stehen die eingangs geschilderten Probleme bei der Herstellung solcher Systeme mit reiner Polyvinylalkoholstabilisierung, welche zur Erzeugung von redispergierbaren Pulvern benötigt werden. Problematisch sind bei der Kombination von Vinylestern und Ethylen mit Acrylaten auch die stark unterschiedlichen Copolymerisationsparamter und die damit verbundene schlechtere Reaktivität der Komponenten.

Probleme können aber nicht nur bei der Herstellung, sondern auch bei der Anwendung von Produkten auf Basis von Vinylester-Mischpolymerisaten mit Ethylen- und Acrylat-Anteil auftreten. Insbesondere bei der Anwendung von Polymerisaten in Form deren Redispersionspulver zur Verbesserung der Mörteleigenschaften, einem Haupteinsatzgebiet von Redispersionspulvern, müssen die Rezepturen über eine gewisse Zeit stabil bleiben und dürfen ihre Verarbeitungskonsistenz nicht wesentlich verändern (Viskositäts- bzw. Zementstabilität); denn es ist einem Anwender nicht zuzumuten, daß er innerhalb einer kurzen Zeitspanne eine neue Mischung anrühren muß. In der Beton- und Mörtelindustrie spielen darüberhinaus die mechanischen Eigenschaften, wie die Druckfestigkeit, die Porosität und damit der Luftporengehalt eine wesentliche Rolle. Sind zu viele Luftporen vorhanden, so sinkt die Druckfestigkeit stark ab, sind zu wenig oder keine Luftporen im Mörtel oder Beton vorhanden, ist der Baustoff nicht genügend frost-taustabil. Die mit dem Dispersionspulver vergüteten hydraulisch abbindenden Systeme sollen zudem noch bessere Haftung gegenüber den unvergüteten Systemen erbringen.

Die DE-A 2214410 (US-A 3883489) beschreibt ein Verfahren zur Herstellung von wässrigen Dispersionen oder in Wasser redispergierbaren Dispersionspulvern auf der Basis von Vinylacetat-Ethylen-Copolymeren. Die Polymerisation erfolgt bei einer Temperatur von 60°C und in Gegenwart von Emulgatoren und Polyvinyalkohol. Die Herstellung von emulgatorfreien, rein Polyvinylalkohol-stabilisierten Vinylester-(Meth) acrylat-Copolymeren wird nicht beschrieben.

Aus der EP-A 765898 (US-A 5763508) ist eine Dispersion bzw. ein Dispersionspulver auf Basis eines Polyvinylalkohol-stabilisierten Vinylacetat-Versaticsäurevinylester-Butylacrylat-Copolymers bekannt. Über das Verfahren zur Herstellung werden keine Angaben gemacht.

Die EP-A 432811 beschreibt die Herstellung von emulgatorstabilisierten Vinylester-(Meth)acrylat-Copolymer-Dispersionen und -Dispersionspulvern bei denen das Monomergemisch als Voremulsion kontinuierlich zudosiert wird. Die Herstellung von mit Polyvinylalkohol stabilisierten Vinylester-(Meth) acrylat-Copolymeren wird nicht beschrieben.

In der EP-A 576844 wird unter anderem die Herstellung von Vinylacetat-Ethylen-Acrylsäureester-Copolymerdispersionen und -Dispersionspulvern beschrieben. Der Einsatz von Emulgatoren wird ausdrücklich empfohlen, und die Verwendung von anderen Schutzkolloiden als Polyvinylalkohol wird als vorteilhaft beschrieben.

In der WO-A 99/42504 wird ein Verfahren zur Herstellung von Vinylester-(Meth)acrylat-Copolymerdispersionen beschrieben, bei dem das Copolymer in Gegenwart eines Gemisches aus nichtionischem Emulgator und Polyvinylalkohol hergestellt wird, und die Comonomere als Mischung kontinuierlich zudosiert werden.

Die EP-A 757065 (US-A 7447578) beschreibt die Herstellung von Schutzkolloid-stabilisierten Vinylacetat-Ethylen-Copolymerisaten in Form deren wässrigen Dispersionen und in Wasser redispergierbaren Dispersionspulvern. Damit sind zweiphasige Polymere zugänglich mit einer ersten ethylenreichen, teilkristallinen Phase und einer zweiten ethylenarmen Phase. Die Copolymerisation von (Meth)acrylaten wird nicht behandelt.

Der Erfindung lag somit die Aufgabe zugrunde, eine stabile, niederviskose, Polyvinylalkohol-stabilisierte Dispersion und entsprechende in Wasser redispergierbare, blockstabile Dispersionspulver auf Basis von Monomeren aus der Gruppe der Vinylester, Ethylen und (Meth)acrylsäureestern, insbesondere Methacrylsäureester, zur Verfügung zu stellen, die beim Einsatz in zementären Anwendungen eine voll befriedigende Viskositäts- bzw. Zementstabilität besitzen und das Zementabbinden nicht behindern.

Gegenstand der Erfindung ist ein Verfahren zur Herstellung von mit Polyvinylalkoholen stabilisierten Polymerisaten auf Basis von Vinylester-, (Meth)acrylat- und gegebenenfalls Ethylen-Monomeren in Form deren wässrigen Dispersionen und in Wasser redispergierbaren Dispersionspulver mittels radikalisch initiierter Emulsionspolymerisation oder Suspensionspolymerisation von einem oder mehreren Monomeren aus der Gruppe der Ester der Acrylsäure und Methacrylsäure mit Vinylestern, gegebenenfalls Ethylen, und gegebenenfalls weiteren damit copolymerisierbaren Monomeren, in Gegenwart von einem oder mehreren Schutzkolloiden aus der Gruppe der Polyvinylalkohole, und gegebenenfalls Trocknung der damit erhaltenen wässrigen Dispersion, dadurch gekennzeichnet, daß
a) die Vinylester-Monomere bei der Polymerisation zu 50 bis 100 Gew.-%, die (Meth)acrylat-Monomere zu 0 bis 40 Gew.-% und Ethylen zu mindestens 80 Gew.-% vorgelegt werden und
b) die Polymerisation bei einer Temperatur von ≥ 60°C durchgeführt wird.

Geeignete Monomere aus der Gruppe der Ester der Acrylsäure oder Methacrylsäure sind Ester von unverzweigten oder verzweigten Alkoholen mit 1 bis 15 C-Atomen. Bevorzugte Methacrylsäureester oder Acrylsäureester sind Methylacrylat, Methylmethacrylat, Ethylacrylat, Ethylmethacrylat, Propylacrylat, Propylmethacrylat, n-Butylacrylat, n-Butylmethacrylat, 2-Ethylhexylacrylat, Norbornylacrylat. Besonders bevorzugt sind Methylacrylat, Methylmethacrylat, n-Butylacrylat, 2-Ethylhexylacrylat und Norbornylacrylat. Am meisten bevorzugt wird Methylmethacrylat. Die genannten (Meth)acrylatmonomere werden im allgemeinen in einer Menge von 1 bis 70 Gew.-%, vorzugsweise 5 bis 40 Gew.-%, bezogen auf das Gesamtgewicht der Monomere, copolymerisiert.

Geeignete Vinylester sind Vinylester von unverzweigten oder verzweigten Carbonsäuren mit 1 bis 15 C-Atomen. Bevorzugte Vinylester sind Vinylacetat, Vinylpropionat, Vinylbutyrat, Vinyl-2-ethylhexanoat, Vinyllaurat, 1-Methylvinylacetat, Vinylpivalat und Vinylester von α-verzweigten Monocarbonsäuren mit 9 bis 11 C-Atomen, beispielsweise VeoVa9^{R} oder VeoVa10^{R} (Handelsnamen der Firma Shell). Besonders bevorzugt ist Vinylacetat. Die genannten Vinylestermonomere werden im allgemeinen in einer Menge von 30 bis 90 Gew.-%, bezogen auf das Gesamtgewicht der Monomere, copolymerisiert.

Der Ethylenanteil beträgt 0 bis 40 Gew.-%, vorzugsweise 5 bis 25 Gew.-%, jeweils bezogen auf das Gesamtgewicht der Monomere.

Gegebenenfalls können noch 0.05 bis 10 Gew.-%, bezogen auf das Gesamtgewicht des Monomergemisches, Hilfsmonomere copolymerisiert werden. Beispiele für Hilfsmonomere sind ethylenisch ungesättigte Mono- und Dicarbonsäuren, vorzugsweise Acrylsäure, Methacrylsäure, Fumarsäure und Maleinsäure; ethylenisch ungesättigte Carbonsäureamide und -nitrile, vorzugsweise Acrylamid und Acrylnitril; Mono- und Diester der Fumarsäure und Maleinsäure wie die Diethyl- und Diisopropylester sowie Maleinsäureanhydrid, ethylenisch ungesättigte Sulfonsäuren bzw. deren Salze, vorzugsweise Vinylsulfonsäure, 2-Acrylamido-2-methylpropansulfonsäure. Weitere Beispiele sind vorvernetzende Comonomere wie mehrfach ethylenisch ungesättigte Comonomere, beispielsweise Divinyladipat, Diallylmaleat, Allylmethacrylat oder Triallylcyanurat, oder nachvernetzende Comonomere, beispielsweise Acrylamidoglykolsäure (AGA), Methylacrylamidoglykolsäuremethylester (MAGME), N-Methylolacrylamid (NMA), N-Methylolmethacrylamid, N-Methylolallylcarbamat; Alkylether wie der Isobutoxyether oder Ester des N-Methylolacrylamids, des N-Methylolmethacrylamids und des N-Methylolallylcarbamats. Geeignet sind auch epoxidfunktionelle Comonomere wie Glycidylmethacrylat und Glycidylacrylat. Weitere Beispiele sind siliciumfunktionelle Comonomere, wie Acryloxypropyltri(alkoxy)- und Methacryloxypropyltri (alkoxy)-Silane, Vinyltrialkoxysilane und Vinylmethyldialkoxysilane, wobei als Alkoxygruppen beispielsweise Ethoxy- und Ethoxypropylenglykolether-Reste enthalten sein können. Genannt seien auch Monomere mit Hydroxy- oder CO-Gruppen, beispielsweise Methacrylsäure- und Acrylsäurehydroxyalkylester wie Hydroxyethyl-, Hydroxypropyl- oder Hydroxybutylacrylat oder -methacrylat sowie Verbindungen wie Diacetonacrylamid und Acetylacetoxyethylacrylat oder -methacrylat.

Besonders bevorzugt werden Copolymerisate von Vinylacetat mit einem oder mehreren Monomeren aus der Gruppe Methylacrylat, Methylmethacrylat, Ethylacrylat, Ethylmethacrylat, Propylacrylat, Propylmethacrylat, n-Butylacrylat, n-Butylmethacrylat, 2-Ethylhexylacrylat, Norbornylacrylat, und gegebenenfalls Ethylen. Insbesondere Copolymerisate von Vinylacetat und Ethylen mit n-Butylacrylat oder 2-Ethylhexylacrylat; sowie Vinylacetat-Acrylsäureester-Copolymerisate mit einem oder mehreren Monomeren aus der Gruppe Methylacrylat, Ethylacrylat, Propylacrylat, n-Butylacrylat, 2-Ethylhexylacrylat, Norbornylacrylat; wobei die genannten Copolymerisate gegebenenfalls noch die obengenannten Hilfsmonomere enthalten können. Am meisten bevorzugt werden Copolymerisate von Vinylacetat und Methylmethacrylat sowie Copolymerisate von Vinylacetat, Methylmethacrylat und Ethylen, wobei die genannten Copolymerisate gegebenenfalls noch die obengenannten Hilfsmonomere enthalten können.

Die Monomerauswahl bzw. die Auswahl der Gewichtsanteile der Comonomere erfolgt dabei so, daß im allgemeinen eine Glasübergangstemperatur Tg von -50°C bis +50°C resultiert. Die Glasübergangstemperatur Tg der Polymerisate kann in bekannter Weise mittels Differential Scanning Calorimetry (DSC) ermittelt werden. Die Tg kann auch mittels der Fox-Gleichung näherungsweise vorausberechnet werden. Nach Fox T. G., Bull. Am. Physics Soc. 1, 3, page 123 (1956) gilt: 1/Tg = x₁/Tg₁ + x₂/Tg₂ + ... + xₙ/Tgₙ, wobei Xₙ für den Massebruch (Gew.-%/100) des Monomeren n steht, und Tgₙ die Glasübergangstemperatur in Kelvin des Homopolymeren des Monomeren n ist. Tg-Werte für Homopolymerisate sind in Polymer Handbook 2nd Edition, J. Wiley & Sons, New York (1975) aufgeführt.
Vorzugsweise haben die genannten Polymerisate, insbeondere im Falle der Copolymerisate von Vinylacetat, Methylmethacrylat und gegebenenfalls Ethylen, einen K-Wert nach Fikentscher (DIN 53726) von 65 bis 80.

Die Herstellung erfolgt nach dem Emulsionspolymerisationsverfahren oder nach dem Suspensionspolymerisationsverfahren, vorzugsweise nach dem Emulsionspolymerisationsverfahren, wobei die Polymerisationstemperatur im allgemeinen 60°C bis 100°C, vorzugsweise 65°C bis 90°C, besonders bevorzugt 80°C bis 90°C beträgt. Bei der Copolymerisation von gasförmigen Comonomeren wie Ethylen kann auch unter Druck, im allgemeinen zwischen 5 bar und 100 bar, gearbeitet werden.

Die Initiierung der Polymerisation erfolgt mit den für die Emulsionspolymerisation bzw. Suspensionspolymerisation gebräuchlichen wasserlöslichen bzw. monomerlöslichen Initiatoren oder Redox-Initiator-Kombinationen. Beispiele für wasserlösliche Initiatoren sind die Natrium-, Kalium- und Ammoniumsalze der Peroxodischwefelsäure, Wasserstoffperoxid, t-Butylperoxid, t-Butylhydroperoxid, Kaliumperoxodiphosphat, tert.-Butylperoxopivalat, Cumolhydroperoxid, Isopropylbenzolmonohydroperoxid Azobisisobutyronitril. Beispiele für monomerlösliche Initiatoren sind Dicetylperoxydicarbonat, Dicyclohexylperoxydicarbonat, Dibenzoylperoxid. Die genannten Initiatoren werden in einer Menge von 0.02 bis 2.0 Gew.-%, vorzugsweise 0.3 bis 0.7 Gew.-%, jeweils bezogen auf das Gesamtgewicht der Monomere, eingesetzt.

Als Redox-Initiatoren verwendet man Kombinationen aus den genannten Initiatoren mit Reduktionsmitteln. Geeignete Reduktionsmittel sind die Sulfite und Bisulfite der Alkalimetalle und von Ammonium, beispielsweise Natriumsulfit, die Derivate der Sulfoxylsäure wie Zink- oder Alkaliformaldehydsulfoxylate, beispielsweise Natriumhydroxymethansulfinat, und Ascorbinsäure. Die Reduktionsmittelmenge beträgt vorzugsweise 0.01 bis 3 Gew.-%, bezogen auf das Gesamtgewicht der Monomere.

Zur Steuerung des Molekulargewichts können während der Polymerisation regelnde Substanzen eingesetzt werden. Falls Regler eingesetzt werden, werden diese in Mengen zwischen 0.01 bis 5.0 Gew.-%, bezogen auf die zu polymerisierenden Monomeren, eingesetzt und separat oder auch vorgemischt mit Reaktionskomponenten dosiert. Beispiele solcher Substanzen sind n-Dodecylmercaptan, tert.-Dodecylmercaptan, Mercaptopropionsäure, Mercaptopropionsäuremethylester, Isopropanol und Acetaldehyd.

Geeignete Polyvinylalkohole sind teilverseifte oder vollverseifte Polyvinylalkohole. Bevorzugt sind teilverseifte Polyvinylalkohole mit einem Hydrolysegrad von 80 bis 95 Mol-% und einer Höpplerviskosität, in 4 %-iger wässriger Lösung von 1 bis 30 mPas (Methode nach Höppler bei 20°C, DIN 53015). Geeignet sind auch teilverseifte, hydrophob modifizierte Polyvinylalkohole mit einem Hydrolysegrad von 80 bis 95 Mol-% und einer Höpplerviskosität, in 4 %-iger wässriger Lösung von 1 bis 30 mPas. Beispiele hierfür sind teilverseifte Copolymerisate von Vinylacetat mit hydrophoben Comonomeren wie Isopropenylacetat, Vinylpivalat, Vinylethylhexanoat, Vinylester von gesättigten alpha-verzweigten Monocarbonsäuren mit 5 oder 9 bis 11 C-Atomen, Dialkylmaleinate und Dialkylfumarate wie Diisopropylmaleinat und Diisopropylfumarat, Vinylchlorid, Vinylalkylether wie Vinylbutylether, Olefine wie Ethen und Decen. Der Anteil der hydrophoben Einheiten beträgt vorzugsweise 0.1 bis 10 Gew.-%, bezogen auf das Gesamtgewicht des teilverseiften Polyvinylalkohols. Es können auch Gemische der genannten Polyvinylalkohole eingesetzt werden.

Weitere geeignete Polyvinylalkohole sind teilverseifte, hydrophobierte Polyvinylalkohole, die durch polymeranaloge Umsetzung, beispielsweise Acetalisierung der Vinylalkoholeinheiten mit C₁- bis C₄-Aldehyden wie Butyraldehyd erhalten werden. Der Anteil der hydrophoben Einheiten beträgt vorzugsweise 0.1 bis 10 Gew.-%, bezogen auf das Gesamtgewicht des teilverseiften Polyvinylacetats. Der Hydrolysegrad beträgt von 80 bis 95 Mol-%, vorzugsweise 85 bis 94 Mol-%, die Höpplerviskosität (DIN 53015, Methode nach Höppler, 4 %-ige wässrige Lösung) von 1 bis 30 mPas, vorzugsweise 2 bis 25 mPas.

Am meisten bevorzugt werden Polyvinylalkohole mit einem Hydrolysegrad von 85 bis 94 Mol-% und einer Höpplerviskosität, in 4 %-iger wässriger Lösung von 3 bis 15 mPas (Methode nach Höppler) bei 20°C, DIN 53015. Die genannten Schutzkolloide sind mittels dem Fachmann bekannter Verfahren zugänglich.

Die Polyvinylalkohole werden im allgemeinen in einer Menge von insgesamt 1 bis 20 Gew.-%, bezogen auf das Gesamtgewicht der Monomere, bei der Polymerisation zugesetzt. Der Schutzkolloid-Anteil kann sowohl vollständig vorgelegt, als auch teilweise vorgelegt und teilweise zudosiert werden. Vorzugsweise werden mindestens 5 Gew.-% des Schutzkolloids vorgelegt, am meisten bevorzugt wird der Schutzkolloid-Anteil vollständig vorgelegt.

Bei dem erfindungsgemäßen Verfahren wird vorzugsweise ohne Zusatz von Emulgatoren polymerisiert. In Ausnahmefällen kann es von Vorteil sein noch zusätzlich kleine Mengen an Emulgatoren einzusetzen, gegebenenfalls 1 bis 5 Gew.-%, bezogen auf die Monomermenge. Geeignete Emulgatoren sind sowohl anionische, kationische als auch nichtionische Emulgatoren, beispielsweise anionische Tenside, wie Alkylsulfate mit einer Kettenlänge von 8 bis 18 C-Atomen, Alkyl- oder Alkylarylethersulfate mit 8 bis 18 C-Atomen im hydrophoben Rest und bis zu 40 Ethylen- oder Propylenoxideinheiten, Alkyl- oder Alkylarylsulfonate mit 8 bis 18 C-Atomen, Ester und Halbester der Sulfobernsteinsäure mit einwertigen Alkoholen oder Alkylphenolen, oder nichtionische Tenside wie Alkylpolyglykolether oder Alkylarylpolyglykolether mit 8 bis 40 Ethylenoxid-Einheiten.

Bei der erfindungsgemäßen Verfahrensweise werden 50 bis 100 Gew.-% der Vinylester-Monomere, 0 bis 40 Gew.-% der (Meth)acrylatmonomere und mindestens 80 Gew.-% des Ethylens, falls dieses copolymerisiert wird, vorgelegt und der jeweilige Rest nach der Initiierung der Polymerisation zudosiert. Vorzugsweise wird so vorgegangen, daß 80 bis 100 Gew.-%, bezogen auf das Gesamtgewicht der Vinylestermonomere, vorgelegt werden und der Rest zudosiert wird. Besonders bevorzugt wird bei der Copolymerisation mit Methacrylatmonomeren der Vinylesteranteil zu 100 Gew.-% vorgelegt. Die (Meth)acrylsäureestermonomere werden vorzugsweise zu 0 bis 20 Gew.-%, bezogen auf das Gesamtgewicht, vorgelegt und der Rest zudosiert. Bei der Copolymerisation von Methacrylatmonomeren werden diese besonders bevorzugt nicht vorgelegt, sondern zu 100 Gew.-% zudosiert. Die Dosierungen können separat (räumlich und zeitlich) durchgeführt werden oder die zu dosierenden Komponenten können alle oder teilweise voremulgiert dosiert werden. Der Monomerumsatz wird mit der Initiatordosierung gesteuert. Die Initiatoren werden insgesamt so zudosiert, daß eine kontinuierliche Polymerisation gewährleistet ist.

Nach Abschluß der Polymerisation kann zur Restmonomerentfernung in Anwendung bekannter Methoden nachpolymerisiert werden, beispielsweise durch mit Redoxkatalysator initiierter Nachpolymerisation. Flüchtige Restmonomere können auch mittels Destillation, vorzugsweise unter reduziertem Druck, und gegebenenfalls unter Durchleiten oder Überleiten von inerten Schleppgasen wie Luft, Stickstoff oder Wasserdampf entfernt werden.

Die mit dem erfindungsgemäßen Verfahren erhältlichen wässrigen Dispersionen haben einen Feststoffgehalt von 30 bis 75 Gew.-%, vorzugsweise von 50 bis 60 Gew.-%. Zur Herstellung der in Wasser redispergierbaren Polymerpulver werden die wässrigen Dispersionen, gegebenenfalls nach Zusatz von Schutzkolloiden als Verdüsungshilfe, getrocknet, beispielsweise mittels Wirbelschichttrocknung, Gefriertrocknung oder Sprühtrocknung. Vorzugsweise werden die Dispersionen sprühgetrocknet. Die Sprühtrocknung erfolgt dabei in üblichen Sprühtrocknungsanlagen, wobei die Zerstäubung mittels Ein-, Zwei- oder Mehrstoffdüsen oder mit einer rotierenden Scheibe erfolgen kann. Die Austrittstemperatur wird im allgemeinen im Bereich von 45°C bis 120°C, bevorzugt 60°C bis 90°C, je nach Anlage, Tg des Harzes und gewünschtem Trocknungsgrad, gewählt.

In der Regel wird die Verdüsungshilfe in einer Gesamtmenge von 3 bis 30 Gew.-%, bezogen auf die polymeren Bestandteile der Dispersion, eingesetzt. Das heißt die Gesamtmenge an Schutzkolloid vor dem Trocknungsvorgang soll mindestens 3 bis 30 Gew.-%, bezogen auf den Polymeranteil betragen; bevorzugt werden 5 bis 20 Gew.-% bezogen auf den Polymeranteil eingesetzt.

Geeignete Verdüsungshilfen sind teilverseifte Polyvinylalkohole; Polyvinylpyrrolidone; Polysaccharide in wasserlöslicher Form wie Stärken (Amylose und Amylopectin), Cellulosen und deren Carboxymethyl-, Methyl-, Hydroxyethyl-, Hydroxypropyl-Derivate; Proteine wie Casein oder Caseinat, Sojaprotein, Gelatine; Ligninsulfonate; synthetische Polymere wie Poly(meth)acrylsäure, Copolymerisate von (Meth)acrylaten mit carboxylfunktionellen Comonomereinheiten, Poly (meth)acrylamid, Polyvinylsulfonsäuren und deren wasserlöslichen Copolymere; Melaminformaldehydsulfonate, Naphthalinformaldehydsulfonate, Styrolmaleinsäure- und Vinylethermaleinsäure-Copolymere. Bevorzugt werden keine weiteren Schutzkolloide als Polyvinylalkohole als Verdüsungshilfe eingesetzt.

Bei der Verdüsung hat sich vielfach ein Gehalt von bis zu 1.5 Gew.-% Antischaummittel, bezogen auf das Basispolymerisat, als günstig erwiesen. Zur Erhöhung der Lagerfähigkeit durch Verbesserung der Verblockungsstabilität, insbesondere bei Pulvern mit niedriger Glasübergangstemperatur, kann das erhaltene Pulver mit einem Antiblockmittel (Antibackmittel), vorzugsweise bis 30 Gew.-%, bezogen auf das Gesamtgewicht polymerer Bestandteile, ausgerüstet werden. Beispiele für Antiblockmittel sind Ca- bzw. Mg-Carbonat, Talk, Gips, Kieselsäure, Kaoline, Silicate mit Teilchengrößen vorzugsweise im Bereich von 10 nm bis 10 µm.

Die Viskosität der zu verdüsenden Speise wird über den Feststoffgehalt so eingestellt, daß ein Wert von < 500 mPas (Brookfield-Viskosität bei 20 Umdrehungen und 23°C), bevorzugt < 250 mPas, erhalten wird. Der Feststoffgehalt der zu verdüsenden Dispersion beträgt > 35 %, bevorzugt > 40 %.

Zur Verbesserung der anwendungstechnischen Eigenschaften können bei der Verdüsung weitere Zusätze zugegeben werden. Weitere, in bevorzugten Ausführungsformen enthaltene, Bestandteile von Dispersionspulverzusammensetzungen sind beispielsweise Pigmente, Füllstoffe, Schaumstabilisatoren, Hydrophobierungsmittel.

Die wässrigen Polymerdispersionen und die in Wasser redispergierbaren, schutzkolloidstabilisierten Polymerpulver können in den dafür typischen Anwendungsbereichen eingesetzt werden. Beispielsweise in bauchemischen Produkten in Verbindung mit hydraulisch abbindenden Bindemitteln wie Zementen (Portland-, Aluminat-, Trass-, Hütten-, Magnesia-, Phosphatzement), Gips, Wasserglas, für die Herstellung von Bauklebern, Putzen, Spachtelmassen, Fußbodenspachtelmassen, Dichtschlämmen, Fugenmörtel und Farben. Ferner als Alleinbindemittel für Beschichtungsmittel und Klebemittel oder als Beschichtungs- bzw. Bindemittel für Textilien und Papier.

Eine besonders bevorzugte Verwendung der Dispersionen und Pulver ist die in zementhaltigen Baukleberrezepturen. Typische Rezepturen enthalten 5 bis 80 Gew.-% Zement, 5 bis 80 Gew.-% Füllstoffe wie Quarzsand, Calciumcarbonat oder Talkum, 0.1 bis 2 Gew.-% Verdickungsmittel wie Celluloseether, Schichtsilikate, Polyacrylate, 0.5 bis 60 Gew.-% der Copolymerisate in Form der Polymerdispersion bzw. des Polymerpulvers und gegebenenfalls weitere Additive zur Verbesserung von Standfestigkeit, Verarbeitbarkeit, offener Zeit und Wasserfestigkeit. Die Angaben in Gew.-% beziehen sich dabei immer auf 100 Gew.-% Trockenmasse der Rezeptur. Die genannten zementhaltigen Baukleberrezepturen finden vor allem bei der Verlegung von Fliesen aller Art (Steingut, Steinzeug, Feinststeinzeug, Keramik, Naturfliesen) im Innen- und Außenbereich als Fliesenkleber Verwendung und werden vor deren Verwendung noch mit der entsprechenden Menge Wasser angerührt.

Die nachfolgenden Beispiele dienen der weiteren Erläuterung der Erfindung:

### Beispiel 1:

### Herstellung eines Vinylacetat-Butylacrylat-Copolymers

In ein Polymerisationsgefäß mit 400 Liter Volumen wurden 63 kg Wasser, 84.5 kg einer 20 %-igen, wässrigen Lösung eines Polyvinylalkohols mit einem Hydrolysegrad von 88 Mol-% und einer Viskosität nach Höppler von 4 mPas, 350 g Eisenammoniumsulfat (1 %-ig in Wasser) sowie 21.1 kg Butylacrylat und 105.6 kg Vinylacetat vorgelegt und auf 65°C erwärmt. Anschließend wurden tert.-Butylhydroperoxid (0.4 %-ig in Wasser) und Brüggolit (Natriumhydroxymethansulfinat) (0.6 %-ig in Wasser) kontinuierlich mit je 3.0 kg/h zudosiert. Ab Polymerisationsbeginn, erkennbar an dem Anstieg der Innentemperatur, wurde das restliche Monomergemisch bestehend aus 63.4 kg Butylacrylat und 21.1 kg Vinylacetat kontinuierlich in 3 h mit 28.2 kg/h zudosiert. Es wurde polymerisiert bis keine Polymerisationswärme mehr beobachtet werden konnte. Zur Entfernung von Restmonomer wurde nach dem Abkühlen auf 30°C mit 1200 g tert.-Butylhydroperoxid (10 %-ig in Wasser) und 1000 g Brüggolit (10 %-ig in Wasser) nachpolymerisiert.
Man erhielt eine Dispersion mit einem Feststoffgehalt von 55.3 %, einer Viskosität von 1950 mPas (Brookfield 20 bei 23°C), einem pH-Wert von 4.1 und einem Teilchengrößendurchmesser Dw von 730 nm. Der Siebrückstand beim Sieben über 250 µm betrug 350 g. Der K-Wert betrug 66. Das freie Restmonomer betrug < 100 ppm. Die Dispersion war im Zement stabil.

### Beispiel 2:

### Herstellung eines Vinylacetat-Butylacrylat-Ethylen-Copolymers

In ein Polymerisationsgefäß mit 18 Liter Volumen wurden 2.71 kg Wasser, 3.39 kg einer 20 %-igen, wässrigen Lösung eines Polyvinylalkohols mit einem Hydrolysegrad von 88 Mol-% und einer Viskosität nach Höppler von 4 mPas, 15 g Eisenammoniumsulfat (1 %-ig in Wasser) sowie 0.67 kg Butylacrylat und 2.79 kg Vinylacetat vorgelegt und auf 65°C erwärmt. Gleichzeitig wurde ein Druck von 60 bar Ethylen auf das Polymerisationsgefäß gegeben (entsprechend einer Ethylenmenge von 2000 g). Anschließend wurden tert.-Butylhydroperoxid (2.0 %-ig in Wasser) und Brüggolit (Natriumhydroxymethansulfinat) (3.0 %-ig in Wasser) kontinuierlich mit je 60 g/h zudosiert. Ab Polymerisationsbeginn, erkennbar an dem Anstieg der Innentemperatur und des Druckes, wurde das restliche Monomergemisch bestehend aus 3.56 kg Butylacrylat kontinuierlich in 3 h mit 1.19 kg/h zudosiert. Es wurde polymerisiert bis keine Polymerisationswärme mehr beobachtet werden konnte. Zur Entfernung von Restmonomer wurde nach dem Entspannen und Abkühlen auf 30°C mit 45 g tert.-Butylhydroperoxid (10 %-ig in Wasser) und 45 g Brüggolit (10 %-ig in Wasser) nachpolymerisiert.
Man erhielt eine Dispersion mit einem Feststoffgehalt von 50.0 %, einer Viskosität von 271 mPas (Brookfield 20 bei 23°C), einem pH-Wert von 4.1 und einem Teilchengrößendurchmesser Dw von 850 nm. Der Siebrückstand beim Sieben über 250 µm betrug 6 g. Das freie Restmonomer betrug < 50 ppm. Die Dispersion war im Zement stabil.

### Beispiel 3:

### Herstellung eines Vinylacetat-Ethylhexylacrylat-Ethylen-Copolymers

In ein Polymerisationsgefäß mit 18 Liter Volumen wurden 2.65 kg Wasser, 3.31 kg einer 20 %-igen, wässrigen Lösung eines Polyvinylalkohols mit einem Hydrolysegrad von 88 Mol-% und einer Viskosität nach Höppler von 4 mPas, 15 g Eisenammoniumsulfat (1 %-ig in Wasser) sowie 0.66 kg Ethylhexylacrylat und 2.73 kg Vinylacetat vorgelegt und auf 65°C erwärmt. Gleichzeitig wurde ein Druck von 60 bar Ethylen auf das Polymerisationsgefäß gegeben (entsprechend einer Ethylenmenge von 1950 g). Anschließend wurden tert.-Butylhydroperoxid (2.0 %-ig in Wasser) und Brüggolit (Natriumhydroxymethansulfinat) (3.0 %-ig in Wasser) kontinuierlich mit je 80 g/h zudosiert. Ab Polymerisationsbeginn, erkennbar an dem Anstieg der Innentemperatur und des Druckes, wurde das restliche Monomergemisch bestehend aus 3.47 kg Butylacrylat kontinuierlich in 3 h mit 1.16 kg/h zudosiert. Es wurde polymerisiert bis keine Polymerisationswärme mehr beobachtet werden konnte. Zur Entfernung von Restmonomer wurde nach dem Entspannen und Abkühlen auf 30°C mit 45 g tert.-Butylhydroperoxid (10 %-ig in Wasser) und 45 g Brüggolit (10 %-ig in Wasser) nachpolymerisiert.
Man erhielt eine Dispersion mit einem Feststoffgehalt von 55.0 %, einer Viskosität von 278 mPas (Brookfield 20 bei 23°C), einem pH-Wert von 4.2 und einem Teilchengrößendurchmesser Dw von 2520 nm. Der Siebrückstand beim Sieben über 250 µm betrug 8 g. Das freie Restmonomer betrug < 50 ppm. Die Dispersion war im Zement stabil.

### Beispiel 4:

### Herstellung eines Vinylacetat-Methylmethacrylat-Ethylen-Copolymers

In ein Polymerisationsgefäß mit 5 Liter Volumen wurden 2830 g Wasser, 2220 g einer 20 %-igen, wässrigen Lösung eines Polyvinylalkohols mit einem Hydrolysegrad von 88 Mol-% und einer Viskosität nach Höppler von 4 mPas, 5 g Eisenammoniumsulfat (1 %-ig in Wasser) sowie 4860 g Vinylacetat vorgelegt und auf 85°C erwärmt. Gleichzeitig wurden 50 bar Ethylen aufgedrückt. Anschließend wurden tert.-Butylhydroperoxid (10 %-ig in Wasser) und Brüggolit (Natriumhydroxymethansulfinat) (5 %-ig in Wasser) kontinuierlich mit 60 g/h bzw. 200 g/h zudosiert. Ab Polymerisationsbeginn, erkennbar an dem Anstieg der Innentemperatur, wurde das restliche Monomergemisch bestehend aus 1210 g Methylmethacrylat kontinuierlich in 3 h mit 403 g/h zudosiert. Paralell zur Monomerdosierung wurden 760 g einer 12 %igen Polyvinylalkohollösung (Polyvinylalkohol wie oben) mit 254 g/h innerhalb von 3 h dosiert. Es wurde polymerisiert bis keine Polymerisationswärme mehr beobachtet werden konnte. Zur Entfernung von Restmonomer wurde nach dem Abkühlen auf 30°C mit 40 g tert.-Butylhydroperoxid (10 %-ig in Wasser) und 40 g Brüggolit (10 %-ig in Wasser) nachpolymerisiert.
Man erhielt eine Dispersion mit einem Feststoffgehalt von 49.3 %, einer Viskosität von 620 mPas (Brookfield 20 bei 23°C), einem pH-Wert von 3.7 und einem Teilchengrößendurchmesser Dw von 1300 nm. Der Siebrückstand beim Sieben über 250 µm betrug 14 g. Der K-Wert betrug 68. Das freie Restmonomer betrug < 100 ppm. Die Dispersion war im Zement stabil.

### Beispiel 5:

### Herstellung eines Vinylacetat-Norbornylacrylat-Ethylen-Copolymers

In ein Polymerisationsgefäß mit 5 Liter Volumen wurden 932 g Wasser, 466 g einer 20 %-igen, wässrigen Lösung eines Polyvinylalkohols mit einem Hydrolysegrad von 88 Mol-% und einer Viskosität nach Höppler von 4 mPas, 5 g Eisenammoniumsulfat (1 %-ig in Wasser) sowie 1170 g Vinylacetat vorgelegt und auf 60°C erwärmt. Gleichzeitig wurden 40 bar Ethylen aufgedrückt. Anschließend wurden tert.-Butylhydroperoxid (3 %-ig in Wasser) und Brüggolit (Natriumhydroxymethansulfinat) (5 %-ig in Wasser) kontinuierlich mit je 14 g/h zudosiert. Ab Polymerisationsbeginn, erkennbar an dem Anstieg der Innentemperatur, wurde die Innentemperatur auf 80°C erhöht. 30 Minuten später wurde das restliche Monomergemisch bestehend aus 466 g Norbornylacrylat und 699 g Vinylacetat kontinuierlich in 2 h mit 585 g/h zudosiert. Paralell zur Monomerdosierung wurden 755 g einer 12.3 %-igen Polyvinylalkohollösung (Polyvinylalkohol wie oben) mit 358 g/h innerhalb von 2 h dosiert. Der Ethylendruck wurde bis zum Ende der Monomerdosierung auf 40 bar gehalten. Es wurde polymerisiert bis keine Polymerisationswärme mehr beobachtet werden konnte. Zur Entfernung von Restmonomer wurde nach dem Abkühlen auf 30°C mit 15 g tert.-Butylhydroperoxid (10 %-ig in Wasser) und 15 g Brüggolit (10 %-ig in Wasser) nachpolymerisiert.
Man erhielt eine Dispersion mit einem Feststoffgehalt von 54.5 %, einer Viskosität von 480 mPas (Brookfield 20 bei 23°C), einem pH-Wert von 3.8 und einem Teilchengrößendurchmesser Dw von 1010 nm. Der Siebrückstand beim Sieben über 250 µm betrug 1 g. Der K-Wert betrug 86 und die Tg 11°C. Das freie Restmonomer betrug < 100 ppm. Die Dispersion war im Zement stabil.

### Beispiel 6:

### Herstellung eines Vinylacetat-Norbornylacrylat-Ethylen-Copolymers

In ein Polymerisationsgefäß mit 5 Liter Volumen wurden 932 g Wasser, 466 g einer 20 %-igen, wässrigen Lösung eines Polyvinylalkohols mit einem Hydrolysegrad von 88 Mol-% und einer Viskosität nach Höppler von 4 mPas, 5 g Eisenammoniumsulfat (1 %-ig in Wasser) sowie 1030 g Vinylacetat und 140 g Norbornylacrylat vorgelegt und auf 60°C erwärmt. Gleichzeitig wurden 40 bar Ethylen aufgedrückt. Anschließend wurden tert.-Butylhydroperoxid (3 %-ig in Wasser) und Brüggolit (Natriumhydroxymethansulfinat) (5 %-ig in Wasser) kontinuierlich mit je 14 g/h zudosiert. Ab Polymerisationsbeginn, erkennbar an dem Anstieg der Innentemperatur, wurde die Innentemperatur auf 80°C erhöht. 30 Minuten später wurde das restliche Monomergemisch bestehend aus 326 g Norbornylacrylat und 839 g Vinylacetat kontinuierlich in 2 h mit 585 g/h zudosiert. Paralell zur Monomerdosierung wurden 755 g einer 12.3 %-igen Polyvinylalkohollösung (Polyvinylalkohol wie oben) mit 358 g/h innerhalb von 2 h dosiert. Der Ethylendruck wurde bis zum Ende der Monomerdosierung auf 40 bar gehalten. Es wurde polymerisiert bis keine Polymerisationswärme mehr beobachtet werden konnte. Zur Entfernung von Restmonomer wurde nach dem Abkühlen auf 30°C mit 15 g tert.-Butylhydroperoxid (10 %-ig in Wasser) und 15 g Brüggolit (10 %-ig in Wasser) nachpolymerisiert.
Man erhielt eine Dispersion mit einem Feststoffgehalt von 56.1 %, einer Viskosität von 236 mPas (Brookfield 20 bei 23°C), einem pH-Wert von 3.5 und einem Teilchengrößendurchmesser Dw von 1570 nm. Der Siebrückstand beim Sieben über 250 µm betrug 1 g. Der K-Wert betrug 91 und die Tg 16°C. Das freie Restmonomer betrug < 100 ppm. Die Dispersion war im Zement stabil.

### Vergleichsbeispiel 7:

### Herstellung eines hochethylenhaltigen Vinylacetat-Ethylen-Copolymers

Analog Beispiel 6 wurde eine Dispersion ohne Acrylatanteil aber mit einem Gewichtsverhältnis Vinylacetat/Ethylen von 70:30 hergestellt.
Man erhielt eine Dispersion mit einem Feststoffgehalt von 50.5 %, einer Viskosität von 300 mPas (Brookfield 20 bei 23°C), einem pH-Wert von 4.0 und einem Teilchengrößendurchmesser Dw von 950 nm. Der Siebrückstand beim Sieben über 250 µm betrug 40 g. Das freie Restmonomer betrug < 100 ppm. Die Dispersion war im Zement stabil.

### Vergleichsbeispiel 8:

### Herstellung eines wenig Ethylen enthaltenden Vinylacetat-Ethylen-Copolymers

Analog Beispiel 6 wurde eine Dispersion ohne Acrylatanteil aber mit einem Gewichtsverhältnis Vinylacetat/Ethylen von 95:5 hergestellt.
Man erhielt eine Dispersion mit einem Feststoffgehalt von 54.9 %, einer Viskosität von 450 mPas (Brookfield 20 bei 23°C), einem pH-Wert von 4.2 und einem Teilchengrößendurchmesser Dw von 1100 nm. Der Siebrückstand beim Sieben über 250 µm betrug 35 g. Das freie Restmonomer betrug < 100 ppm. Die Dispersion war im Zement stabil.

### Vergleichsbeispiel 9:

### Vollständige Acrylatvorlage

Analog Beispiel 4 wurde eine Dispersion hergestellt mit dem Unterschied, daß auch Methylmethacrylat vollständig in die Vorlage gegeben wurde.
Man erhielt eine Dispersion, die jedoch beim Abkühlen koagulierte.

### Vergleichsbeispiel 10:

### Polymerisation bei 50°C

Analog Beispiel 2 wurde eine Dispersion hergestellt mit dem Unterschied, daß bei 50°C polymerisiert wurde.
Man erhielt eine Dispersion mit einem Feststoffgehalt von 51.2 %, einer Viskosität von 8500 mPas (Brookfield 20 bei 23°C), einem pH-Wert von 4.3 und einem Teilchengrößendurchmesser Dw von 350 nm. Der Siebrückstand beim Sieben über 250 *µ*m betrug 500 g. Das freie Restmonomer betrug < 100 ppm. Die Dispersion war im Zement instabil.

### Pulverherstellung:

Die Dispersionen aus den Beispielen 1 bis 6 und den Vergleichsbeispielen 7 bis 8 wurden mit 5 Gew.-% (fest/fest) Polyvinylalkohol mit einem Hydrolysegrad von 88 Mol-% und einer Viskosität nach Höppler von 4 mPas versetzt und mit Wasser auf eine Verdüsungsviskosität von 250 mPas verdünnt. Die Dispersion wurde dann mittels Zweistoffdüse versprüht. Als Verdüsungskomponente diente auf 4 bar vorgepreßte Luft, die gebildeten Tropfen wurden mit auf 125°C erhitzter Luft im Gleichstrom getrocknet. Das erhaltene trockene Pulver wurde mit 10 Gew.-% handelsüblichem Antiblockmittel (Gemisch aus Calcium-Magnesium-Carbonat und Magnesiumhydrosilikat) versetzt.

### Redispergierverhalten der Polymerfilme:

Aus den Dispersionen der genannten Beispielen (vor Sprühtrocknung) wurden auf Glasplatten 0.2 mm dicke Filme hergestellt und diese 15 Minuten bei 105°C getrocknet. Zur Überprüfung der Filmredispergierbarkeit wurde bei Raumtemperatur mit einer Pieiner Pipette jeweils ein Wassertropfen auf eine homogene Stelle des zu prüfenden Filmes aufgebracht, und nach 60 Sekunden Einwirkzeit der Wassertropfen mit der Fingerkuppe so lange an der gleichen Stelle verrieben, bis die Glasplatte an dieser Stelle filmfrei war, der Film in Filmstücke zerfiel oder vollständig erhalten blieb.
Die Redispergierbarkeit der Polymerfilme wurde mit folgendem Bewertungsschema beurteilt:
Note 1: Film läßt sich durch leichtes Reiben sofort redispergieren oder redispergiert bereits selbständig;
Note 2: Film läßt sich durch Reiben redispergieren, wenig redispergierbare Filmstücke möglich;
Note 3: Film läßt sich nur durch kräftiges Reiben unter Bildung von Filmstücken redispergieren;
Note 4: Film läßt sich auch durch längeres kräftiges Reiben nicht redispergieren, sondern zerfällt in Filmstücke.

### Bestimmung des Absitzverhaltens der Pulver (Röhrenabsitz):

Zur Bestimmung des Absitzverhaltens wurden jeweils 50 g des Dispersionspulvers in 50 ml Wasser redispergiert, danach auf 0.5 % Festgehalt verdünnt und die Absitzhöhe an Feststoff von 100 ml dieser Redispersion in eine graduierte Röhre gefüllt und das Absetzen nach 1 Stunde gemessen.

### Bestimmung der Blockfestigkeit:

Zur Bestimmung der Blockfestigkeit wurde das Dispersionspulver in ein Eisenrohr mit Verschraubung gefüllt und danach mit einem Metallstempel belastet. Nach Belastung wurde im Trockenschrank 16 Stunden bei 50°C gelagert. Nach dem Abkühlen auf Raumtemperatur wurde das Pulver aus dem Rohr entfernt und die Blockstabilität qualitativ durch Zerdrücken des Pulver bestimmt. Die Blockstabilität wurde wie folgt klassifiziert:
1 = sehr gute Blockstabilität
2 = gute Blockstabilität
3 = befriedigende Blockstabilität
4 = nicht blockstabil, Pulver nach Zerdrücken nicht mehr rieselfähig.

### Bestimmung der Zementstabilität:

Es wurde eine Zementmischung der nachfolgenden Rezeptur angerührt:

| | |
|---|---|
| Portlandzement | 82.5 g |
| Calcit CaCO₃ 10-40 mm | 75 g |
| Quarzsand 200-500 mm | 142 g |
| Dispersionspulver | 14.5 g |
| Wasser | 85 g |

Die Verarbeitbarkeit der Zementmischung wurde über einen Zeitraum von 2 Stunden beobachtet und qualitativ beurteilt.

Die Prüfergebnisse sind in Tabelle 1 zusammengefaßt.

**Tabelle 1:**

| Bsp. | Redispergierbarkeit | Röhrenabsitz [cm] | Blockfestigkeit | Zementstabilität |
|---|---|---|---|---|
| Bsp. 1 | 1 | 1.5 | 1 | Stabil |
| Bsp. 2 | 1 | 2.0 | 1 - 2 | Stabil |
| Bsp. 3 | 1 | 1.0 | 1 | Stabil |
| Bsp. 4 | 1 | 1.0 | 1 | Stabil |
| Bsp. 5 | 1 | 1.0 | 1 | Stabil |
| Bsp. 6 | 1 | 1.0 | 1 | Stabil |
| V.bsp. 7 | 1 | 1.0 | 1 | Stabil |
| V.bsp. 8 | 1 | 1.5 | 1 | Stabil |
| V.bsp. 9 | | | | Instabil |
| V.bsp.10 | | | | Instabil |

Mit der erfindungsgemäßen Verfahrensweise können Produkte mit vergleichbarer Block- und somit Lagerstabilität der Pulver erzielt werden wie bei herkömmlichen Vinylacetat-Ethylen-Pulvern. Auch die Redispergierbarkeit und die Zementstabilität ist vergleichbar.

Die Haftzugfestigkeiten im Fliesenkleber wurden in folgender Rezeptur überprüft (6 Gew.-% Kunststoffanteil):

| | |
|---|---|
| Quarzsand | 586 Teile |
| Portlandzement | 350 Teile |
| Cellulose | 4 Teile |
| Dispersionspulver | 60 Teile |

Es wurden die Haftzugfestigkeiten nach 4 Lagerbedingungen bestimmt:

| | |
|---|---|
| 28T: | 28 Tage Trockenlagerung |
| 7T/21N: | 7 Tage Trockenlagerung/21 Tage Naßlagerung |
| 14T/14T70°C/1T: | Wärmelagerung |
| Frost-Tau: | Frost-Tau-Lagerung |

Die Ergebnisse sind in Tabelle 2 zusammengefaßt:

**Tabelle 2:**

| Bsp. | RD % | RF N/mm² | 28T N/mm² | 7T/21N N/mm² | 14T/14T70°C/1T N/mm² | Frost-Tau N/mm² |
|---|---|---|---|---|---|---|
| Bsp. 1 | 391 | 7.2 | 1.65 | 0.81 | 1.44 | 0.81 |
| Bsp. 2 | 299 | 3.3 | 1.43 | 0.88 | 1.28 | 0.86 |
| Bsp. 3 | 241 | 1.8 | 1.56 | 0.83 | 1.33 | 0.83 |
| Bsp. 4 | 263 | 15.0 | 2.10 | 0.92 | 1.82 | 0.94 |
| Bsp. 5 | 254 | 12.9 | 1.73 | 0.79 | 1.71 | 0.76 |
| Bsp. 6 | 283 | 17.1 | 1.88 | 0.84 | 2.10 | 0.96 |
| V.bsp. 7 | 400 | 6.5 | 1.05 | 0.85 | 1.28 | 0.87 |
| V.bsp. 8 | 250 | 16.5 | 2.06 | 0.70 | 1.32 | 0.80 |

### Diskussion der Ergebnisse:

Das erfindungsgemäße Pulver aus Beispiel 6 zeigt im Vergleich zu den Pulvern aus den Vergleichsbeispielen 7 und 8 eine Kombination der guten Haftzugfestigkeiten nach allen Lagerungen. Das Pulver aus Vergleichsbeispiel 7 ist schwach bei der Normklimalagerung (niedrige Tg). Das Pulver aus Vergleichsbeispiel 8 ist schwach bei der Naßlagerung (hohe Tg, aber wenig Ethylen, dadurch verseifungsanfällig). Durch den Einsatz von harten Acrylaten kann viel Ethylen (Verseifungsstabilität) eingebaut werden und dennoch eine hohe Tg beibehalten werden. Besonders sichtbar werden die Vorteile bei der Festigkeit nach Wärmelagerung. Der Vergleich zwischen Beispiel 5 und dem Beispiel 6 zeigt, daß es vorteilhafter ist einen Teil des Acrylates bei der Polymerisation vorzulegen.

## Patentansprüche

1. Verfahren zur Herstellung von mit Polyvinylalkoholen stabilisierten Polymerisaten auf Basis von Vinylester-, (Meth)acrylat- und gegebenenfalls Ethylen-Monomeren in Form deren wässrigen Dispersionen und in Wasser redispergierbaren Dispersionspulver mittels radikalisch initiierter Emulsionspolymerisation oder Suspensionspolymerisation von einem oder mehreren Monomeren aus der Gruppe der Ester der Acrylsäure und Methacrylsäure mit Vinylestern, gegebenenfalls Ethylen, und gegebenenfalls weiteren damit copolymerisierbaren Monomeren, in Gegenwart von einem oder mehreren Schutzkolloiden aus der Gruppe der Polyvinylalkohole, und gegebenenfalls Trocknung der damit erhaltenen wässrigen Dispersion, **dadurch gekennzeichnet, daß**
a) die Vinylester-Monomere bei der Polymerisation zu 50 bis 100 Gew.-%, die (Meth)acrylat-Monomere zu 0 bis 40 Gew.-% und Ethylen zu mindestens 80 Gew.-% vorgelegt werden und
b) die Polymerisation bei einer Temperatur von ≥ 60°C durchgeführt wird.

2. Verfahren nach Anspruch 1, **dadurch gekennzeichnet, daß** unter Verwendung von 0.3 bis 0.7 Gew.-% Initiator, bezogen auf das Gesamtgewicht der Monomere, polymerisiert wird.

3. Verfahren nach Anspruch 1 und 2, **dadurch gekennzeichnet, daß** die Polymerisationstemperatur 65°C bis 90°C beträgt.

4. Verfahren nach Anspruch 1 bis 3, **dadurch gekennzeichnet, daß** (Vinylester von unverzweigten oder verzweigten Carbonsäuren mit 1 bis 15 C-Atomen und Ester der Methacrylsäure von unverzweigten oder verzweigten Alkoholen mit 1 bis 15 C-Atomen), sowie gegebenenfalls Ethylen, copolymerisiert werden.

5. Verfahren nach Anspruch 1 bis 4, **dadurch gekennzeichnet, daß** der Vinylesteranteil zu 100 Gew.-% vorgelegt wird.

6. Verfahren nach Anspruch 1 bis 5, **dadurch gekennzeichnet, daß** die (Meth)acrylsäureestermonomere zu 100 Gew.-% zudosiert werden.

7. Verfahren nach Anspruch 1 bis 6, **dadurch gekennzeichnet, daß** teilverseifte Polyvinylalkohole mit einem Hydrolysegrad von 80 bis 95 Mol-% und einer Höpplerviskosität, in 4 %-iger wässriger Lösung von 1 bis 30 mPas (Methode nach Höppler bei 20°C, DIN 53015) oder teilverseifte, mit hydrophoben Comonomeren hydrophob modifizierte Polyvinylalkohole mit einem Hydrolysegrad von 80 bis 95 Mol-% und einer Höpplerviskosität, in 4 %-iger wässriger Lösung von 1 bis 30 mPas, oder deren Gemische eingesetzt werden.

8. Verfahren nach Anspruch 1 bis 7, **dadurch gekennzeichnet, daß** Polyvinylalkohole mit einem Hydrolysegrad von 85 bis 94 Mol-% und einer Höpplerviskosität, in 4 %-iger wässriger Lösung von 3 bis 15 mPas (Methode nach Höppler bei 20°C, DIN 53015) eingesetzt werden.

9. Verfahren nach Anspruch 1 bis 8, **dadurch gekennzeichnet, daß** mindestens 5 Gew.-% des Schutzkolloids vorgelegt werden.

10. Verfahren nach Anspruch 1 bis 9, **dadurch gekennzeichnet, daß**, in Gegenwart von 0.01 bis 5.0 Gew.-% Reglern, bezogen auf die zu polymerisierenden Monomeren, polymerisiert wird.

11. Verfahren nach Anspruch 1 bis 10, **dadurch gekennzeichnet, daß** zur Herstellung der in Wasser redispergierbaren Polymerpulver die wässrigen Dispersionen mittels Sprühtrocknung getrocknet werden.

## Claims

1. Process for the preparation of polyvinyl alcohol-stabilized polymers based on vinyl ester, (meth)acrylate and optionally ethylene monomers in the form of their aqueous dispersions and dispersion powders redispersible in water, by means of free radical emulsion polymerization or suspension polymerization of one or more monomers from the group consisting of the esters of acrylic acid and methacrylic acid with vinyl esters, optionally ethylene and optionally further monomers copolymerizable therewith, in the presence of one or more protective colloids from the group consisting of the polyvinyl alcohols, and optionally drying of the aqueous dispersion obtained thereby, **characterized in that**
a) from 50 to 100% by weight of the vinyl ester monomers, from 0 to 40% by weight of the (meth)acrylate monomers and at least 80% by weight of ethylene are initially introduced in the polymerization and
b) the polymerization is carried out at a temperature of ≥ 60°C.

2. Process according to Claim 1, **characterized in that** polymerization is effected with the use of from 0.3 to 0.7% by weight of initiator, based on the total weight of the monomers.

3. Process according to Claims 1 and 2, **characterized in that** the polymerization temperature is from 65°C to 90°C.

4. Process according to any of Claims 1 to 3, **characterized in that** vinyl esters of straight-chain or branched carboxylic acids having 1 to 15 carbon atoms and esters of methacrylic acid of straight-chain or branched alcohols having 1 to 15 carbon atoms and optionally ethylene are copolymerized.

5. Process according to any of Claims 1 to 4, **characterized in that** 100% by weight of vinyl ester are initially introduced.

6. Process according to any of Claims 1 to 5, **characterized in that** 100% by weight of (meth)acrylate monomers are metered in.

7. Process according to any of Claims 1 to 6, **characterized in that** partially hydrolyzed polyvinyl alcohols having a degree of hydrolysis of from 80 to 95 mol% and a Höppler viscosity, in 4% strength aqueous solution, of from 1 to 30 mPas (Höppler method at 20°C, DIN 53015) or partially hydrolyzed polyvinyl alcohols rendered hydrophobic with hydrophobic comonomers and having a degree of hydrolysis of from 80 to 95 mol% and a Höppler viscosity, in 4% strength aqueous solution, of from 1 to 30 mPas, or mixtures thereof are used.

8. Process according to any of Claims 1 to 7, **characterized in that** polyvinyl alcohols having a degree of hydrolysis of from 85 to 94 mol% and a Höppler viscosity, in 4% strength aqueous solution, of from 3 to 15 mPas (Höppler method at 20°C, DIN 53015) are used.

9. Process according to any of Claims 1 to 8, **characterized in that** at least 5% by weight of the protective colloid are initially introduced.

10. Process according to any of Claims 1 to 9, **characterized in that** polymerization is effected in the presence of from 0.01 to 5.0% by weight of regulators, based on the monomers to be polymerized.

11. Process according to any of Claims 1 to 10, **characterized in that**, for the preparation of the polymer powders redispersible in water, the aqueous dispersions are dried by means of spray-drying.

## Revendications

1. Procédé pour la préparation de polymères à base de monomères ester vinylique, (méth)acrylate et éventuellement éthylène, stabilisés avec des poly(alcool vinylique)s, sous forme de leurs dispersions aqueuses et de poudres de dispersions redispersables dans l'eau, par polymérisation en suspension ou polymérisation en émulsion à amorçage radicalaire d'un ou plusieurs monomères choisis dans le groupe des esters de l'acide acrylique et de l'acide méthacrylique avec des esters vinyliques, éventuellement l'éthylène et éventuellement d'autres monomères copolymérisables avec ceux-ci, en présence d'un ou plusieurs colloïdes protecteurs choisis dans le groupe des poly(alcool vinylique)s, et éventuellement séchage de la dispersion aqueuse ainsi obtenue,
**caractérisé en ce que**
a) on dispose au préalable dans la polymérisation les monomères ester vinylique à raison de 50 à 100 % en poids, les monomères (méth)acrylate à raison de 0 à 40 % en poids et l'éthylène à raison d'au moins 80 % en poids et
b) on effectue la polymérisation à une température de ≥ 60 °C.

2. Procédé selon la revendication 1, **caractérisé en ce qu'**on effectue la polymérisation en utilisant de 0,3 à 0,7 % en poids d'amorceur, par rapport au poids total des monomères.

3. Procédé selon les revendications 1 et 2, **caractérisé en ce que** la température de polymérisation vaut de 65 °C à 90 °C.

4. Procédé selon les revendications 1 à 3, **caractérisé en ce que** des esters vinyliques d'acides carboxyliques ramifiés ou non ramifiés ayant de 1 à 15 atomes de carbone et des esters de l'acide méthacrylique d'alcools ramifiés ou non ramifiés ayant de 1 à 15 atomes de carbone, ainsi qu'éventuellement de l'éthylène sont copolymérisés.

5. Procédé selon les revendications 1 à 4, **caractérisé en ce qu'**on dispose au préalable la quantité d'ester vinylique à raison de 100 % en poids.

6. Procédé selon les revendications 1 à 5, **caractérisé en ce qu'**on ajoute par addition dosée les monomères ester d'acide (méth)acrylique à raison de 100 % en poids.

7. Procédé selon les revendications 1 à 6, **caractérisé en ce qu'**on utilise des poly(alcool vinylique)s partiellement saponifiés ayant un degré d'hydrolyse de 80 à 95 % en moles et une viscosité Höppler, en solution aqueuse à 4 %, de 1 à 30 mPa.s (méthode selon Höppler à 20°C, DIN 53015) ou des poly(alcool vinylique)s partiellement saponifiés, à modification hydrophobe par des comonomères hydrophobes, ayant un degré d'hydrolyse de 80 à 95 % en moles et une viscosité Hôppler, en solution aqueuse à 4 %, de 1 à 30 mPa.s ou des mélanges de ceux-ci.

8. Procédé selon les revendications 1 à 7, **caractérisé en ce qu'**on utilise des poly(alcool vinylique)s ayant un degré d'hydrolyse de 85 à 94 % en moles et une viscosité Hôppler, en solution aqueuse à 4 %, de 3 à 15 mPa.s (méthode selon Höppler à 20°C, DIN 53015).

9. Procédé selon les revendications 1 à 8, **caractérisé en ce qu'**on dispose au préalable au moins 5 % en poids du colloïde protecteur.

10. Procédé selon les revendications 1 à 9, **caractérisé en ce qu'**on effectue la polymérisation en présence de 0,01 à 5,0 % en poids de régulateurs, par rapport aux monomères à polymériser.

11. Procédé selon les revendications 1 à 10, **caractérisé en ce que** pour la préparation des poudres de polymères redispersables dans l'eau on sèche les dispersions aqueuses par séchage par atomisation.
